# EUROPEAN PATENT SPECIFICATION

(11) **EP 2 755 415 B1**
(45) Date of publication and mention of the grant of the patent: **08.06.2016**
(21) Application number: 12785059.2
(22) Date of filing: 24.02.2012
(51) Int. Cl.: H04W 24/08, H04W 92/14

(54) **METHOD FOR COLLECTING MOBILE USER INFORMATION IN NETWORK, ENB, AND SYSTEM**
VERFAHREN ZUM SAMMELN VON MOBILGERÄTE-BENUTZERINFORMATIONEN IN EINEM NETZWERK, ENB UND SYSTEM DAFÜR
PROCÉDÉ DE COLLECTE D'INFORMATIONS D'UTILISATEUR MOBILE DANS UN RÉSEAU, ENB ET SYSTÈME

(30) Priority: 08.09.2011 CN 201110265829
(43) Date of publication of application: 16.07.2014
(73) Proprietor: ZTE Corporation, Shenzhen, Guangdong 518057 (CN)
(72) Inventor: TIAN, Wei, Shenzhen Guangdong 518057 (CN)
(74) Representative: Protector IP Consultants AS
(86) International application number: PCT/CN2012/071605
(87) International publication number: WO 2012/155579

(56) References cited:
- WO-A1-2009/045138
- CN-A- 101 132 648
- CN-A- 101 500 221
- CN-A- 102 355 679
- US-A1- 2010 113 000
- "3rd Generation Partnership Project; Technical Specification Group Services and System Aspects; Telecommunication management; Subscriber and equipment trace; Trace control and configuration management (Release 10)", 3GPP STANDARD; 3GPP TS 32.422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.3.0, 30 March 2011 (2011-03-30), pages 1-111, XP050476573, [retrieved on 2011-03-30]
- ZTE CORP: 'S5-103308 Add missing interfaces S3, S4 and S6d in the interface table of SGSN' 3GPP TSG-SA5 (TELECOM MANAGEMENT) SA5#74-OAM 15 November 2010 - 19 November 2010, JACKSONVILLE, USA, XP050528896
- ALCATEL-LUCENT: 'S5-092416 Trace Interface list' 3GPP TSG-SA5 (TELECOM MANAGEMENT) MEETING SA5#65 11 May 2009 - 15 May 2009, TALLINN, ESTONIA, XP050348631

## Description

### TECHNICAL FIELD

The present disclosure relates to the field of network communication, and in particular to a method, eNB, and system for collecting mobile subscriber information in a network.

### BACKGROUND

At present, there have been various means for collecting user information in operation in a single base station or Evolved NodeB (eNB), in which user data are traced generally by instructing in advance the base station to report data relevant to a specified user according to a unique identifier of the user in the base station. However, in an Evolved Universal Terrestrial Radio Access Network (E-UTRAN), on one hand, it is difficult to predict which base station a user may move to owning to uncertainty in movement of the user, and on the other hand, no unique identifier of the user is available to an access network according to the 3rd Generation Partnership Project (3GPP) protocols. Information, such as an International Mobile Subscriber Identification Number (IMSI), of a non-access layer, is encrypted and cannot be parsed out by the access network, which then cannot uniquely identify a user to be traced before and after handover of the user. To solve the above issues, the 3GPP protocols provide a trace function capable of tracing standard layer-three signalling of a mobile subscriber in a network, greatly improving efficiency in pinpointing a relevant issue in a service flow. However, there is no effective means for tracing relevant data of a mobile subscriber at media plane, a Media Access Control (MAC) layer, and a physical layer in a network, such that outside analysis for pinpointing such an issue often requires great input of human and material resources while high efficiency still cannot be achieved.

The trace function provided by the 3GPP protocols provides a field of one BYTE for defining a type of an interface where data to be traced (i.e. mobile subscriber information) are located, wherein three bits are used to denote an interface S1 between a base station and a core network, an interface X2 between two base stations, an interface Uu between a base station and a User Equipment (UE), respectively. The field contains just eight bits, three of which are used for denoting types of standard interfaces (i.e. the interface S1, the interface X2, and the interface Uu), with the remaining five bits as a reserved field. Direct extension of the remaining five bits cannot meet the need for tracing data at other internal interfaces at a layer three as well as data at the media plane, the MAC layer, and the physical layer, as there are far more than 5 types of interfaces at the media plane, the MAC layer, and the physical layer according to a granularity thereof. Tracing of massive internal data is vital for enriching adjustable and measurable means, analyzing a network index and optimizing network performance. In particular, for a present Long Term Evolution (LTE) system in an initial stage of development, with great instability in network functionality and performance, there is a cry for effective means capable of acquiring relevant information on operation inside a base station rapidly and accurately so as to further pinpoint and solve a network issue and improve network quality.

"3rd Generation Partnership Project; Technical Specification Group Services and System Aspects; Telecommunication management; Subscriber and equipment trace; Trace control and configuration management (Release 10)", XP050476573 describes the mechanisms used for the control and configuration of the Trace functionality at the EMs, NEs and UEs. It covers the triggering events for starting/stopping of subscriber/UE activity traced over 3GPP standardized signalling interfaces, the types of trace mechanisms, configuration of a trace, level of detail available in the trace data, the generation of Trace results in the Network Elements (NEs) and User Equipment (UE) and the transfer of these results to one or more EM(s) and/or Network Manager(s) (NM(s)).

There is no existing method for tracing, while a subscriber is in a mobile state in a network, data at massive internal custom interfaces (i.e. those other than the standard interfaces) to improve the efficiency in pinpointing a network issue, so as to meet the need for analyzing a network index and optimizing network performance.

It can be seen that with prior art it is impossible to trace data at massive internal custom interfaces.

### SUMMARY

The features of the method and apparatus according to the present disclosure are defined in the independent claims, and the preferable features according to the present invention are defined in the dependent claims.

An eNB is informed, using a reserved bit in an Interfaces To Trace field, whether mobile subscriber information at a custom interface is required to be collected, determines a type of a custom interface to be traced, and then collects mobile subscriber information at a custom interface corresponding to the type, such that it is possible to trace data at massive internal custom interfaces.

### BRIEF DESCRIPTION OF THE DRAWINGS

Fig.1 is a flow chart of a method provided by the disclosure;
Fig.2 is a diagram of a data format for tracing a type of an interface provide by the disclosure;
Fig.3 is a diagram of a structure of an apparatus provide by the disclosure; and
Fig.4 is a diagram of a structure of a system provide by the disclosure.

### DETAILED DESCRIPTION

Embodiments of the disclosure are described below with reference to accompanying drawings to allow tracing data at massive internal custom interfaces.

A method for collecting mobile subscriber information in a network provided by embodiments of the disclosure applies to an E-UTRAN.

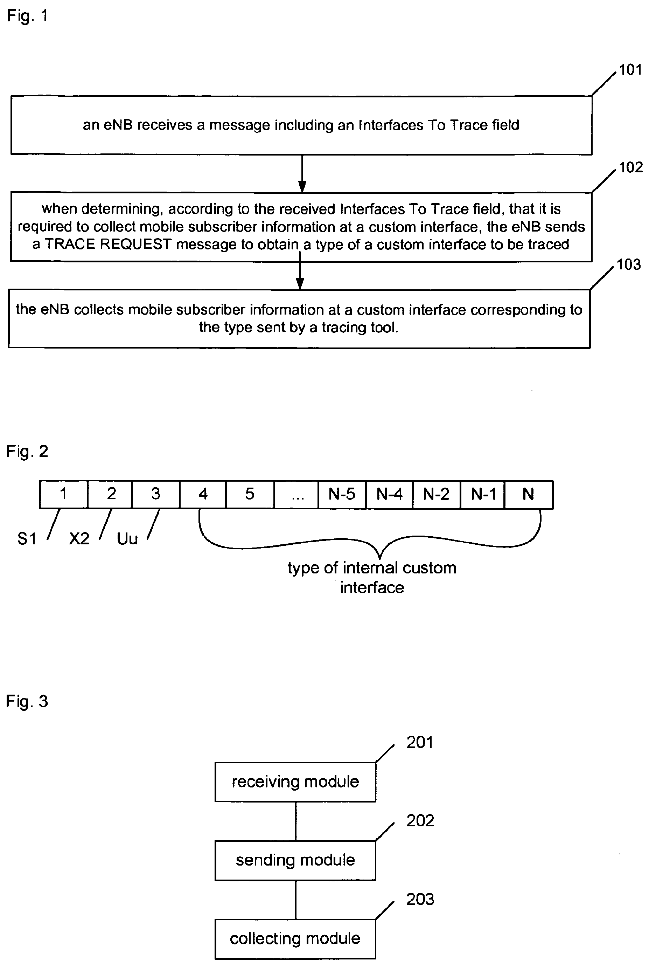

The method for collecting mobile subscriber information in a network provided by the disclosure is elaborated below with reference to Fig.1. The method includes steps as follows.
Step 101: an eNB (base station) receives a message including an Interfaces To Trace field, wherein a reserved bit in the Interfaces To Trace field is configured to indicate whether the eNB has to collect mobile subscriber information at a custom interface, wherein the custom interface is an interface applied in an E-UTRAN other than an interface S1, an interface X2, and an interface Uu.
Step 102: when determining, according to the received Interfaces To Trace field, that it is required to collect mobile subscriber information at a custom interface, the eNB sends a TRACE REQUEST message to a tracing tool to obtain a type of a custom interface to be traced.
Step 103: the eNB collects mobile subscriber information at a custom interface corresponding to the type sent by the tracing tool.

According to the embodiment, when mobile subscriber information at a custom interface in the E-UTRAN is required to be traced, an eNB is informed whether it is required to trace the mobile subscriber information at the custom interface using a reserved bit of an Interfaces To Trace field in a Trace Activation cell. When the mobile subscriber information at the custom interface in the network is required to be traced (namely, collected), the eNB acquires a type of a custom interface to be traced (i.e. a custom interface where the mobile subscriber information to be collected is located) by requesting a type of a custom interface to be traced, and collects mobile subscriber information at a custom interface of the type.

With a solution of the embodiment, it is possible to collect mobile subscriber information in a network, as well as tracing, while a subscriber is in a mobile state in a network, data at massive internal custom interfaces to improve the efficiency in pinpointing a network issue, thereby meeting need for analyzing a network index and optimizing network performance.

In Step 101, the eNB receives the message including the Interfaces To Trace field in a scenario of access of a UE, a scenario of handover via an interface S1, or a scenario of handover via an interface X2.

As in the scenario of access of a UE, after the UE has established an access to the network, a core network sends a TRACE START message or an INITIAL CONTEXT SETUP REQUEST message to the eNB, and the accessed eNB receives the TRACE START message or the INITIAL CONTEXT SETUP REQUEST message sent by the tracing tool via the core network, wherein a Trace Activation cell of the TRACE START message and the INITIAL CONTEXT SETUP REQUEST message includes the Interfaces To Trace field. The eNB is then informed by the reserved bit of the Interfaces To Trace field whether it is required to trace mobile subscriber information at a custom interface. For example, a first reserved bit, namely, the fourth bit, of the Interfaces To Trace field indicates whether the mobile subscriber information at the custom interface is required to be traced. The forth bit of 1 indicates that the mobile subscriber information at the custom interface is required to be traced. The forth bit of 0 indicates that the eNB does not have to trace the mobile subscriber information at the custom interface.

As in the scenario of handover via an interface S1, after a source eNB sends a handover request, a target eNB receives a HANDOVER REQUEST message sent by the tracing tool via the core network, wherein a Trace Activation cell of the HANDOVER REQUEST message includes the Interfaces To Trace field. The eNB is then informed by the reserved bit of the Interfaces To Trace field whether it is required to trace mobile subscriber information at the custom interface. Similar to the scenario of access of a UE, the tracing tool also sends, via the core network, the eNB a message including the Interfaces To Trace field to inform the eNB whether it is required to trace mobile subscriber information at the custom interface.

As for the scenario of handover via an interface X2, which is slightly different from the two aforementioned cases, a source eNB sends a target eNB the Interfaces To Trace field in a Trace Activation cell via a HANDOVER REQUEST message to inform the target eNB whether it is required to trace mobile subscriber information at the custom interface. In the scenario of handover via an interface X2, no message including the Interfaces To Trace field is sent through the core network.

In Step 102, in the scenario of access of a UE, the scenario of handover via an interface S1, or the scenario of handover via an interface X2, after receiving the Interfaces To Trace field, the eNB will determine whether the eNB has to collect the mobile subscriber information at the custom interface according to the reserved bit. When determining the eNB has to collect the mobile subscriber information at the custom interface, the eNB sends the tracing tool a TRACE REQUEST message to obtain a type of a custom interface to be traced to determine custom interfaces where mobile user information is located are to be collected, and custom interfaces where mobile user information is located is not required to be collected. When it is determined that no mobile subscriber information at any custom interface needs to be collected, the eNB directly collects mobile user information at the interface S1, the interface X2, and the interface Uu without sending any TRACE REQUEST message to the tracing tool.

In Step 103, the tracing tool sends, via the core network, the eNB the type of the custom interface to be traced. A data format for tracing a type of an interface in the embodiment is as defined in Fig.2. A mask flag is allocated for all N interfaces applied in the E-UTRAN (e.g. if N=100, the 100 interfaces include 3 standard interfaces and 97 internal custom interfaces, or if N=90, the 90 interfaces include 3 standard interfaces and 87 internal custom interfaces). The mask flag is used to indicate whether it is required to trace data at this type of interface. This allocation can be easily extended, and it may also be instructed to collect mobile subscriber information at the standard interfaces at the same time when custom-interface tracing is required. In this way, after receiving an indication message that indicates, via a mask flag, whether the mobile subscriber information at each of the interfaces applied in the E-UTRAN has to be collected, the eNB determines mobile subscriber information at which interface or interfaces is required to be collected, for example, "1" denotes that collection is required and denotes the type of the custom interface to be traced, while "0" denotes that no collection is required. Accordingly, the eNB collects mobile subscriber information at a custom interface corresponding to the mask flag of "1".

Also provided in embodiments of the disclosure is an eNB for collecting mobile subscriber information in a network. The eNB applies to the E-UTRAN. As shown in Fig.3, the eNB includes:
a receiving module 201 configured to receive a message including an Interfaces To Trace field, wherein a reserved bit in the Interfaces To Trace field is configured to indicate whether the eNB has to collect mobile subscriber information at a custom interface, wherein the custom interface is an interface applied in the E-UTRAN other than an interface S1, an interface X2, and an interface Uu;
a sending module 202 configured to send a TRACE REQUEST message to a tracing tool to obtain a type of a custom interface to be traced when it is determined that the mobile subscriber information at the custom interface is required to be collected according to the received Interfaces To Trace field; and
a collecting module 203 configured to collect mobile subscriber information at a custom interface corresponding to the type sent by the tracing tool.

In an embodiment, the receiving module 201 may be further configured to receive the message including the Interfaces To Trace field, wherein the message may be sent by the tracing tool via a core network.

In an embodiment, the eNB may be an accessed eNB, and the receiving module 201 may be further configured to: in a scenario of access of a User Equipment (UE), after the UE has established an access to the network, receive a TRACE START message or an INITIAL CONTEXT SETUP REQUEST message sent by the tracing tool via the core network, wherein a Trace Activation cell of the received TRACE START message or of the received INITIAL CONTEXT SETUP REQUEST message includes the Interfaces To Trace field.

In an embodiment, the eNB may be a target eNB, and the receiving module 201 may be further configured to: in a scenario of handover via an interface S1, after a source eNB sends a handover request, receive a HANDOVER REQUEST message sent by the tracing tool via the core network, wherein a Trace Activation cell of the HANDOVER REQUEST message includes the Interfaces To Trace field.

In an embodiment, the eNB may be a target eNB, and the receiving module 201 may be further configured to: in a scenario of handover via an interface X2, receive a HANDOVER REQUEST message sent by a source eNB, wherein a Trace Activation cell of the HANDOVER REQUEST message includes the Interfaces To Trace field.

In an embodiment, the receiving module 201 may be further configured to receive an indication message that indicates, via a mask flag, whether the mobile subscriber information at each of the interfaces applied in the E-UTRAN has to be collected.

In an embodiment, the collecting module 203 may be further configured to directly collect mobile user information at the interface S1, the interface X2, and the interface Uu when it is determined that the mobile subscriber information at the custom interface is not required to be collected according to the received Interfaces To Trace field.

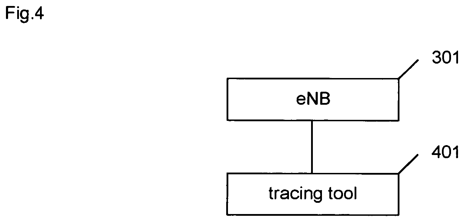

An embodiment of the disclosure may further provide a system for collecting mobile subscriber information in a network. As shown in Fig.4, the system applies to the E-UTRAN, and includes:
an eNB 301 configured to: receive a message including an Interfaces To Trace field, wherein a reserved bit in the Interfaces To Trace field is configured to indicate whether the eNB has to collect mobile subscriber information at a custom interface, wherein the custom interface is an interface applied in the E-UTRAN other than an interface S1, an interface X2, and an interface Uu; when it is determined that the mobile subscriber information at the custom interface is required to be collected according to the received Interfaces To Trace field, send a TRACE REQUEST message to a tracing tool to obtain a type of a custom interface to be traced; and collect mobile user information at a custom interface corresponding to the type sent by the tracing tool; and
the tracing tool 401 configured to send the type of the custom interface to be traced to the eNB via a core network.

The embodiments are only for explaining a technical solution of the disclosure, and are not intended to limit the scope of the disclosure. Although the disclosure is elaborated with reference to embodiments, note that those skilled in the art may make any modification and equivalent substitution to the technical solution of the disclosure.

## Claims

1. A method for collecting mobile subscriber information in a network, the method being applied to an Evolved Universal Terrestrial Radio Access Network, E-UTRAN, **characterized in that** the method comprises:
receiving, by an Evolved NodeB, eNB (301), a message comprising an Interfaces To Trace field (101), wherein a reserved bit in the Interfaces To Trace field is configured to indicate whether the eNB (301) has to collect mobile subscriber information at a custom interface, wherein the custom interface is an interface applied in the E-UTRAN other than an interface S1, an interface X2, and an interface Uu;
determining, by the eNB (301), according to the received Interfaces To Trace field, whether the eNB (301) has to collect the mobile subscriber information at the custom interface, and
when determining the eNB (301) has to collect the mobile subscriber information at the custom interface, sending a TRACE REQUEST message to a tracing tool (401) to obtain a type of a custom interface to be traced (102); and
collecting, by the eNB (301), mobile subscriber information at a custom interface corresponding to the type sent by the tracing tool (401) (103),
wherein the method further comprises: after the step of determining, by the eNB (301) whether the eNB (301) has to collect the mobile subscriber information at the custom interface, and before the step of collecting, by the eNB (301), mobile subscriber information at a custom interface corresponding to the type sent by the tracing tool (401),
receiving, by the eNB (301), an indication message that indicates, via a mask flag, whether the mobile subscriber information at each of the interfaces applied in the E-UTRAN has to be collected.

2. The method according to claim 1, wherein the receiving, by an eNB (301), a message comprising an Interfaces To Trace field comprises:
receiving, by the eNB (301), the message comprising the Interfaces To Trace field, wherein the message is sent by the tracing tool (401) via a core network.

3. The method according to claim 2, wherein the receiving, by an eNB (301), a message comprising an Interfaces To Trace field comprises:
in a scenario of access of a User Equipment, UE, after the UE has established an access to the network, receiving, by an accessed eNB (301), a TRACE START message or an INITIAL CONTEXT SETUP REQUEST message sent by the tracing tool (401) via the core network, wherein a Trace Activation cell of the received TRACE START message or of the received INITIAL CONTEXT SETUP REQUEST message comprises the Interfaces To Trace field.

4. The method according to claim 2, wherein the receiving, by an eNB (301), a message comprising an Interfaces To Trace field comprises:
in a scenario of handover via an interface S1, after a source eNB sends a handover request, receiving, by a target eNB (301), a HANDOVER REQUEST message sent by the tracing tool (401) via the core network, wherein a Trace Activation cell of the HANDOVER REQUEST message comprises the Interfaces To Trace field.

5. The method according to claim 1, wherein the receiving, by an eNB (301), a message comprising an Interfaces To Trace field comprises:
in a scenario of handover via an interface X2, receiving, by a target eNB (301), a HANDOVER REQUEST message sent by a source eNB, wherein a Trace Activation cell of the HANDOVER REQUEST message comprises the Interfaces To Trace field.

6. The method according to claim 1, further comprising: after the receiving, by an eNB (301), a message comprising an Interfaces To Trace field,
when the eNB (301) determines, according to the received Interfaces To Trace field, that the eNB (301) does not have to collect the mobile subscriber information at the custom interface, directly collecting, by the eNB (301), mobile user information at the interface S1, the interface X2, and the interface Uu.

7. An Evolved NodeB, eNB, (301) for collecting mobile subscriber information in a network, the eNB (301) applied in an Evolved Universal Terrestrial Radio Access Network, E-UTRAN, **characterized in that** the eNB (301) comprises:
a receiving module (201) configured to receive a message comprising an Interfaces To Trace field, wherein a reserved bit in the Interfaces To Trace field is configured to indicate whether the eNB (301) has to collect mobile subscriber information at a custom interface, wherein the custom interface is an interface applied in the E-UTRAN other than an interface S1, an interface X2, and an interface Uu;
a sending module (202) configured to send a TRACE REQUEST message to a tracing tool (401) to obtain a type of a custom interface to be traced when it is determined that the mobile subscriber information at the custom interface is required to be collected according to the received Interfaces To Trace field; and
a collecting module (203) configured to collect mobile subscriber information at a custom interface corresponding to the type sent by the tracing tool (401),
wherein the receiving module (201) is further configured to receive an indication message that indicates, via a mask flag, whether the mobile subscriber information at each of the interfaces applied in the E-UTRAN has to be collected.

8. The eNB (301) according to claim 7, wherein the receiving module (201) is further configured to receive the message comprising the Interfaces To Trace field, wherein the message is sent by the tracing tool (401) via a core network.

9. The eNB (301) according to claim 8, wherein the eNB (301) is an accessed eNB (301), and
the receiving module (201) is further configured to: in a scenario of access of a User Equipment, UE, after the UE has established an access to the network, receive a TRACE START message or an INITIAL CONTEXT SETUP REQUEST message sent by the tracing tool (401) via the core network, wherein a Trace Activation cell of the received TRACE START message or of the received INITIAL CONTEXT SETUP REQUEST message comprises the Interfaces To Trace field.

10. The eNB (301) according to claim 8, wherein the eNB (301) is a target eNB (301), and
the receiving module (201) is further configured to: in a scenario of handover via an interface S1, after a source eNB sends a handover request, receive a HANDOVER REQUEST message sent by the tracing tool (401) via the core network, wherein a Trace Activation cell of the HANDOVER REQUEST message comprises the Interfaces To Trace field.

11. The eNB (301) according to claim 7, wherein the eNB (301) is a target eNB (301), and
the receiving module (201) is further configured to: in a scenario of handover via an interface X2, receive a HANDOVER REQUEST message sent by a source eNB, wherein a Trace Activation cell of the HANDOVER REQUEST message comprises the Interfaces To Trace field.

12. The eNB (301) according to claim 7, wherein the collecting module (203) is further configured to directly collect mobile user information at the interface S1, the interface X2, and the interface Uu when it is determined that the mobile subscriber information at the custom interface is not required to be collected according to the received Interfaces To Trace field.

13. A system for collecting mobile subscriber information in a network, the system applied in an E-UTRAN, and the system comprising:
the eNB (301) according to claim 7; and
the tracing tool (401) configured to send the type of the custom interface to be traced to the eNB (301) via a core network.

## Patentansprüche

1. Verfahren zum Sammeln einer Mobilfunkteilnehmerinformation in einem Netzwerk, wobei das Verfahren auf ein entwickeltes universelles erdgebundenes Funkzugangsnetzwerk, E-UTRAN, angewendet wird, **dadurch gekennzeichnet, dass** das Verfahren umfasst:
Empfangen, durch einen entwickelten NodeB, eNB (301), einer Nachricht, umfassend ein Schnittstellenverfolgungsfeld (101), wobei ein reserviertes Bit in dem Schnittstellenverfolgungsfeld ausgelegt ist, um anzuzeigen, ob der eNB (301) die Mobilfunkteilnehmerinformation an einer Kundenschnittstelle sammeln muss, wobei die Kundenschnittstelle eine in dem E-UTRAN bereitgestellte, von einer S1-Schnittstelle, einer X2-Schnittstelle und einer Uu-Schnittstelle verschiedene Schnittstelle ist;
Ermitteln, durch den eNB (301), entsprechend des empfangenen Schnittstellenverfolgungsfelds, ob der eNB (301) die Mobilfunkteilnehmerinformation an der Kundenschnittstelle sammeln muss, und
wenn ermittelt wird, dass der eNB (301) die Mobilfunkteilnehmerinformation an der Kundenschnittstelle sammeln muss, Senden einer Verfolgungsanfragenachricht an ein Verfolgungswerkzeug (401), um einen Typ einer zu verfolgenden Kundenschnittstelle (102) zu erhalten; und
Sammeln der Mobilfunkteilnehmerinformation durch den eNB (301) an einer Kundenschnittstelle, welche zum durch das Verfolgungswerkzeug (401) gesendeten Typ korrespondiert (103),
wobei das Verfahren weiterhin umfasst: nach dem Schritt des Ermittelns, durch den eNB (301), ob der eNB (301) die Mobilfunkteilnehmerinformation an der Kundenschnittstelle sammeln muss, und vor dem Schritt des Sammelns, durch den eNB (301), der Mobilfunkteilnehmerinformation an einer zum durch das Verfolgungswerkzeug (401) gesendeten Typ korrespondierenden Kundenschnittstelle,
Empfangen, durch den eNB (301), einer Anzeigenachricht, welche durch ein Markierungszeichen anzeigt, ob die Mobilfunkteilnehmerinformation an jeder der in dem E-UTRAN bereitgestellten Schnittstellen gesammelt werden muss.

2. Verfahren nach Anspruch 1, wobei das Empfangen, durch einen eNB (301), einer Nachricht, umfassend ein Schnittstellenverfolgungsfeld, umfasst:
Empfangen, durch den eNB (301), der das Schnittstellenverfolgungsfeld umfassenden Nachricht, wobei die Nachricht durch das Verfolgungswerkzeug (401) über ein Kernnetzwerk gesendet worden ist.

3. Verfahren nach Anspruch 2, wobei das Empfangen, durch einen eNB (301), einer ein Schnittstellenverfolgungsfeld umfassenden Nachricht umfasst:
in einem Szenario eines Zugriffs auf ein Nutzergerät, UE, nachdem das UE einen Zugang zum Netzwerk aufgebaut hat, Empfangen, durch einen aufgerufenen eNB (301), einer Verfolgungsstartnachricht oder einer Ausgangskontextaufbauanforderungsnachricht, welche durch das Verfolgungswerkzeug (401) über das Kernnetzwerk gesendet worden ist, wobei eine Verfolgungsaktivierungszelle der empfangenen Verfolgungsstartnachricht oder der empfangenen Ausgangskontextaufbauanforderungsnachricht das Schnittstellenverfolgungsfeld umfasst.

4. Verfahren nach Anspruch 2, wobei das Empfangen, durch einen eNB (301), einer ein Schnittstellenverfolgungsfeld umfassenden Nachricht umfasst:
in einem Szenario der Übergabe über eine S1-Schnittstelle, nachdem ein Ausgangs-eNB eine Übergabeanfrage sendet, Empfangen, durch ein Ziel-eNB (301), einer durch das Verfolgungswerkzeug (401) über das Kernnetzwerk gesendeten Übergabeanfragenachricht, wobei eine Verfolgungsaktivierungszelle der Übergabeanfragenachricht das Schnittstellenverfolgungsfeld umfasst.

5. Verfahren nach Anspruch 1, wobei das Empfangen, durch einen eNB (301), einer ein Schnittstellenverfolgungsfeld umfassenden Nachricht umfasst:
in einem Szenario einer Übergabe über eine X2-Schnittstelle, Empfangen, durch ein Ziel-eNB (301), einer durch eine Ausgangs-eNB gesendeten Übergabeanfragenachricht, wobei eine Verfolgungsaktivierungszelle der Übergabeanfragenachricht das Schnittstellenverfolgungsfeld umfasst.

6. Verfahren nach Anspruch 1, weiterhin umfassend: nach dem Empfangen, durch einen eNB (301), einer ein Schnittstellenverfolgungsfeld umfassenden Nachricht,
wenn der eNB (301) ermittelt, gemäß dem empfangenen Schnittstellenverfolgungsfeld, dass der eNB (301) die Mobilfunkteilnehmerinformation an der Kundenschnittstelle nicht sammeln muss, direktes Sammeln, durch den eNB (301), der Mobilfunknutzerinformation an der S1-Schnittstelle, der X2-Schnittstelle und der Uu-Schnittstelle.

7. Entwickeltes NodeB, eNB (301), zum Sammeln einer Mobilfunkteilnehmerinformation in einem Netzwerk, wobei der eNB (301) in einem entwickelten universellen erdgebundenen Funkzugangsnetzwerk, E-UTRAN, eingesetzt ist, **dadurch gekennzeichnet, dass** der eNB (301) umfasst:
ein Empfangsmodul (201), welches zum Empfangen einer ein Schnittstellenverfolgungsfeld umfassenden Nachricht ausgelegt ist, wobei ein reserviertes Bit im Schnittstellenverfolgungsfeld ausgelegt ist, um anzuzeigen, ob der eNB (301) die Mobilfunkteilnehmerinformation an einer Kundenschnittstelle sammeln muss, wobei die Kundenschnittstelle eine im E-UTRAN bereitgestellte von einer S1-Schnittstelle, einer X2-Schnittstelle und einer Uu-Schnittstelle verschiedene Schnittstelle ist;
ein Sendemodul (202), welches zum Senden einer Verfolgungsanfragenachricht an ein Verfolgungswerkzeug (401) ausgelegt ist, um einen Typ einer zu verfolgenden Kundenschnittstelle zu erhalten, wenn ermittelt worden ist, dass die Mobilfunkteilnehmerinformation an der Kundenschnittstelle gemäß des empfangenen Schnittstellenverfolgungsfelds gesammelt werden muss; und
ein Sammelmodul (203), welches zum Sammeln der Mobilfunkteilnehmerinformation an einer Kundenschnittstelle ausgelegt ist, welche zum durch das Verfolgungswerkzeug (401) gesendeten Typ korrespondiert,
wobei das Empfangsmodul (201) weiterhin zum Empfangen einer Anzeigenachricht ausgelegt ist, welche durch eine Markierungszeichen anzeigt, ob die Mobilfunkteilnehmerinformation an jeder der im E-UTRAN bereitgestellten Schnittstellen gesammelt werden muss.

8. eNB (301) nach Anspruch 7, wobei das Empfangsmodul (201) weiterhin zum Empfangen der das Schnittstellenverfolgungsfeld umfassenden Nachricht ausgelegt ist, wobei die Nachricht durch das Verfolgungswerkzeug (401) über ein Kernnetzwerk gesendet worden ist.

9. eNB (301) nach Anspruch 8, wobei der eNB (301) ein aufgerufener eNB (301) ist, und
das Empfangsmodul (201) weiterhin ausgelegt ist, um: in einem Szenario eines Zugriffs auf ein Nutzergerät, UE, nachdem das UE einen Zugang zu dem Netzwerk aufgebaut hat, eine durch das Verfolgungswerkzeug (401) über das Kernnetzwerk gesendete Verfolgungsstartnachricht oder eine Ausgangskontextaufbauanforderungsnachricht zu empfangen, wobei eine Verfolgungsaktivierungszelle der empfangenen Verfolgungsstartnachricht oder der empfangenen Ausgangskontextaufbauanforderungsnachricht das Schnittstellenverfolgungsfeld umfasst.

10. eNB (301) nach Anspruch 8, wobei der eNB (301) ein Ziel-eNB (301) ist, und
das Empfangsmodul (201) weiterhin ausgelegt ist, um: in einem Szenario einer Übergabe über eine S1-Schnittstelle, nachdem ein Ausgangs-eNB eine Übergabeanfrage gesendet hat, eine durch das Verfolgungswerkzeug (401) über das Kernnetzwerk gesendete Übergabeanfragenachricht zu empfangen, wobei eine Verfolgungsaktivierungszelle der Übergabeanfragenachricht das Schnittstellenverfolgungsfeld umfasst.

11. eNB (301) nach Anspruch 7, wobei der eNB (301) ein Ziel-eNB (301) ist, und
das Empfangsmodul (201) weiterhin ausgelegt ist, um: in einem Szenario einer Übergabe über eine X2-Schnittstelle, eine durch einen Ausgangs-eNB gesendete Übergabeanfragenachricht zu empfangen, wobei eine Verfolgungsaktivierungszelle der Übergabeanfragenachricht das Schnittstellenverfolgungsfeld umfasst.

12. eNB (301) nach Anspruch 7, wobei das Sammelmodul (203) weiterhin ausgelegt ist, um direkt die Mobilfunknutzerinformation an der S1-Schnittstelle, der X2-Schnittstelle und der Uu-Schnittstelle zu sammeln, wenn ermittelt worden ist, dass die Mobilfunkteilnehmerinformation an der Kundenschnittstelle gemäß des Schnittstellenverfolgungsfelds nicht gesammelt werden muss.

13. System zum Sammeln einer Mobilfunkteilnehmerinformation in einem Netzwerk, wobei das System in einem E-UTRAN angewandt wird, und das System umfasst:
den eNB (301) nach Anspruch 7; und
das Verfolgungswerkzeug (401), welches ausgelegt ist, den Typ der zu verfolgenden Kundenschnittstelle zum eNB (301) über ein Kernnetzwerk zu senden.

## Revendications

1. Procédé de collecte d'informations d'abonné mobile dans un réseau, le procédé étant appliqué à un réseau d'accès radio terrestre universel évolué, E-UTRAN, **caractérisé en ce que** le procédé comprend :
la réception, par un noeud B évolué, eNB (301), d'un message comprenant un champ Interfaces À Suivre (101), dans lequel un bit réservé dans le champ Interfaces À Suivre est configuré pour indiquer si l'eNB (301) doit collecter des informations d'abonné mobile au niveau d'une interface personnalisée, dans lequel l'interface personnalisée est une interface appliquée dans l'E-UTRAN autre qu'une interface S1, une interface X2 et une interface Uu ;
le fait de déterminer, par l'eNB (301), en fonction du champ Interfaces À Suivre reçu, si l'eNB (301) doit collecter les informations d'abonné mobile au niveau de l'interface personnalisée, et
lorsque l'on détermine que l'eNB (301) doit collecter les informations d'abonné mobile au niveau de l'interface personnalisée, l'envoi d'un message DEMANDE DE SUIVI à un outil de suivi (401) pour obtenir un type d'une interface personnalisée à suivre (102) ; et
la collecte, par l'eNB (301), d'informations d'abonné mobile au niveau d'une interface personnalisée correspondant au type envoyé par l'outil de suivi (401, (103) ; et
dans lequel le procédé comprend en outre : après l'étape consistant à déterminer, par l'eNB (301) si l'eNB (301) doit collecter les informations d'abonné mobile au niveau de l'interface personnalisée, et avant l'étape consistant à collecter, par l'eNB (301), des informations d'abonné mobile au niveau d'une interface personnalisée correspondant au type envoyé par l'outil de suivi (401),
la réception, par l'eNB (301), d'un message d'indication qui indique, via un indicateur masque, si les informations d'abonné mobile au niveau de chacune des interfaces appliquées dans l'E-UTRAN doivent être collectées.

2. Procédé selon la revendication 1, dans lequel la réception, par un eNB (301), d'un message comprenant un champ Interfaces À Suivre comprend :
la réception, par l'eNB (301), du message comprenant le champ Interfaces À Suivre, dans lequel le message est envoyé par l'outil de suivi (401) par le biais d'un réseau central.

3. Procédé selon la revendication 2, dans lequel la réception, par un eNB (301), d'un message comprenant un champ Interfaces À Suivre comprend :
dans un scénario d'accès d'un Equipement Utilisateur, UE, après que l'UE a établi un accès au réseau, la réception, par un eNB (301) accédé, d'un message DEMARRAGE DE SUIVI ou un message DEMANDE DE CONFIGURATION DE CONTEXTE INITIAL envoyé par l'outil de suivi (401) par le biais du réseau central, dans lequel une cellule d'Activation de Suivi du message DEMARRAGE DE SUIVI reçu ou du message DEMANDE DE CONFIGURATION DE CONTEXTE INITIAL reçu comprend le champ Interfaces À Suivre.

4. Procédé selon la revendication 2, dans lequel la réception, par un eNB (301), d'un message comprenant un champ Interfaces À Suivre comprend :
dans un scénario de transfert par le biais d'une interface S1, après qu'un eNB source a envoyé une demande de transfert, la réception, par un eNB cible (301), d'un message DEMANDE DE TRANSFERT envoyé par l'outil de suivi (401) par le biais du réseau central, dans lequel une cellule d'Activation de Suivi du message DEMANDE DE TRANSFERT comprend le champ Interfaces À Suivre.

5. Procédé selon la revendication 1, dans lequel la réception, par un eNB (301), d'un message comprenant un champ Interfaces À Suivre comprend :
dans un scénario de transfert par le biais d'une interface X2, la réception, par un eNB cible (301), d'un message DEMANDE DE TRANSFERT envoyé par un eNB source, dans lequel une cellule d'Activation de Suivi du message DEMANDE DE TRANSFERT comprend le champ Interfaces À Suivre.

6. Procédé selon la revendication 1, comprenant en outre : après la réception, par un eNB (301), d'un message comprenant un champ Interfaces À Suivre,
quand l'eNB (301) détermine, en fonction du champ Interfaces À Suivre reçu, que l'eNB (301) n'a pas à collecter les informations d'abonné mobile au niveau de l'interface personnalisée, la collecte directe, par l'eNB (301), d'informations d'abonné mobile au niveau de l'interface S1, de l'interface X2 et de l'interface Uu.

7. Noeud B évolué, eNB, (301) pour collecter des informations d'abonné mobile dans un réseau, l'eNB (301) étant appliqué dans un réseau d'accès radio terrestre universel évolué, E-UTRAN, **caractérisé en ce que** l'eNB (301) comprend :
un module de réception (201) configuré pour recevoir un message comprenant un champ Interfaces À Suivre, dans lequel un bit réservé dans le champ Interfaces À Suivre est configuré pour indiquer si l'eNB (301) doit collecter des informations d'abonné mobile au niveau d'une interface personnalisée, dans lequel l'interface personnalisée est une interface appliquée dans l'E-UTRAN autre qu'une interface S1, une interface X2 et une interface Uu ;
un module d'envoi (202) configuré pour envoyer un message DEMANDE DE SUIVI à un outil de suivi (401) pour obtenir un type d'une interface personnalisée à suivre lorsque l'on détermine que les informations d'abonné mobile au niveau de l'interface personnalisée ont besoin d'être collectées en fonction du champ Interfaces À Suivre reçu ; et
un module de collecte (203) configuré pour collecter des informations d'abonné mobile au niveau d'une interface personnalisée correspondant au type envoyé par l'outil de suivi (401),
dans lequel le module de réception (201) est en outre configuré pour recevoir un message d'indication qui indique, par le biais d'un indicateur masque, si les informations d'abonné mobile au niveau de chacune des interfaces appliquées dans l'E-UTRAN doivent être collectées.

8. ENB (301) selon la revendication 7, dans lequel le module de réception (201) est en outre configuré pour recevoir le message comprenant le champ Interfaces À Suivre, dans lequel le message est envoyé par l'outil de suivi (401) par le biais d'un réseau central.

9. ENB (301) selon la revendication 8, dans lequel l'eNB (301) est un eNB accédé (301), et
le module de réception (201) est en outre configuré pour : dans un scénario d'accès d'un Equipement Utilisateur, UE, après que l'UE a établi un accès au réseau, recevoir un message DEMARRAGE DE SUIVI ou un message DEMANDE DE CONFIGURATION DE CONTEXTE INITIAL envoyé par l'outil de suivi (401) par le biais du réseau central, dans lequel une cellule d'Activation de Suivi du message DEMARRAGE DE SUIVI reçu ou du message DEMANDE DE CONFIGURATION DE CONTEXTE INITIAL reçu comprend le champ Interfaces À Suivre.

10. ENB (301) selon la revendication 8, dans lequel l'eNB (301) est un eNB cible (301), et
le module de réception (201) est en outre configuré pour : dans un scénario de transfert par le biais d'une interface S1, après qu'un eNB source a envoyé une demande de transfert, recevoir un message DEMANDE DE TRANSFERT envoyé par l'outil de suivi (401) par le biais du réseau central, dans lequel une cellule d'Activation de Suivi du message DEMANDE DE TRANSFERT comprend le champ Interfaces À Suivre.

11. ENB (301) selon la revendication 7, dans lequel l'eNB (301) est un eNB cible (301), et
le module de réception (201) est en outre configuré pour : dans un scénario de transfert par le biais d'une interface X2, recevoir un message DEMANDE DE TRANSFERT envoyé par un eNB source, dans lequel une cellule d'Activation de Suivi du message DEMANDE DE TRANSFERT comprend le champ Interfaces À Suivre.

12. ENB (301) selon la revendication 7, dans lequel le module de collecte (203) est en outre configuré pour collecter directement des informations d'abonné mobile au niveau de l'interface S1, de l'interface X2 et de l'interface Uu lorsque l'on détermine que les informations d'abonné mobile au niveau de l'interface personnalisée n'ont pas besoin d'être collectées en fonction du champ Interfaces À Suivre reçu.

13. Système pour collecter des informations d'abonné mobile dans un réseau, le système étant appliqué dans un E-UTRAN, et le système comprenant :
l'eNB (301) selon la revendication 7 ; et
l'outil de suivi (401) configuré pour envoyer le type de l'interface personnalisée à suivre à l'eNB (301) par le biais d'un réseau central.
